Europäisches Patentamt

**European Patent Office**

**Office européen des brevets**

(19)

(11) Publication number: **0 001 353**
**B1**

(12) EUROPEAN PATENT SPECIFICATION

(45) Date of publication of patent specification: **09.12.81**

(51) Int. Cl.³: **G 11 B 23/02, B 65 D 85/00**

(21) Application number: **78300402.1**

(22) Date of filing: **19.09.78**

(54) **Container for magnetic memory storage members.**

(30) Priority: **19.09.77 US 834488**

(43) Date of publication of application:
**04.04.79 Bulletin 79/7**

(45) Publication of the grant of the European patent:
**09.12.81 Bulletin 81/49**

(84) Designated Contracting States:
**BE CH DE FR GB NL**

(56) References cited:
**CH - A - 367 339**
**DE - U - 7 245 400**
**DE - U - 7 624 173**

(73) Proprietor: **Egly, Robert A.**
**1630 Marguerite**
**Corona Del Mar California (US)**

(72) Inventor: **Egly, Robert A.**
**1630 Marguerite**
**Corona Del Mar California (US)**

(74) Representative: **Wright, Peter David John et al,**
**R.G.C. Jenkins & Co. 53-64 Chancery Lane**
**London WC2A 1QU (GB)**

Container for magnetic memory storage members

The field of this invention lies within the computer, magnetic card and magnetic disk art. In particular, it lies within the magnetic disk and magnetic card storage art, wherein storage for magnetic disks and magnetic cards required for later use within a memory drive, such as a disk drive reader or word processing typewriter, is provided.

The prior art related to magnetic disk and magnetic card storage has been provided in various forms of storage that in some cases were casual at best. In particular, some of the disks and cards were stored loosely and left to lie around. In this manner, the disks gathered dust and dirt and were often damaged.

Certain boxes, made for example from cardboard, have also been designed to receive the disks and cards in a stacked configuration.

One further prior container is the subject of German Utility Model No. 7,245,400. This container comprises two covers, joined together by way of a web to which the covers are both hinged, and an insert attached to one of the covers, for receiving a magnetic tape. The insert is pivoted to the associated cover near the web so that it can be folded between the two covers, when the container is closed, and can be pivoted into an upright position, upstanding from the associated cover, when the two covers are spread flat in an open condition of the container.

Such disk and card storage boxes and magnetic storage containers, however, are fragile and/or cumbersome.

This invention overcomes these problems of the above prior storage means, enabling a user to make use of stored disks and cards in a facile and ready manner.

In accordance with the invention there is provided a container for holding magnetic memory members comprising:

a first cover;

a second cover joined by a hinge connected to said first cover;

an insert pivotally attached to one of said covers so as to allow said insert to be folded between said first and second covers in a closed condition of the container; and,

means on said insert to retain magnetic memory members;

characterised in that the insert is pivotally attached to said one cover at a region remote from the hinge connection joining the second cover to the first cover so as to be supportable across the opening between the first and second covers by engagement with the other of said covers in an open condition of the container.

Thus, the disk and card storage container of this invention incorporates a pair of foldable covers. In a preferred form of the invention, one of the covers has a wall or ledge around it that serves to provide side walls for the container when the covers are placed in overlying relationship; and the other cover serves the function of providing not only a cover, but also a pivotal support for the insert, which is in the form of a tray-like member.

The tray-like insert preferably is hinged to the relevant cover by means of a pintal or living hinge and has a pair of fan tabs overlying the tray base that can be utilized to receive a series of disks or cards therebehind. In this manner, the insert may be arranged to hold the memory disks and cards in a stacked and substantially upright position when the container is open. Side walls of the insert may then serve to prevent lateral displacement of the disks or cards stored therein. When cards are to be stored, an additional, divider, wall can be used between the cards. The fan tabs of this insert allow for a fanning or opening up of the disks or cards that are stored therein, so that their respective numbers or titles can be read.

The entire enclosure can be formed of plastic with living hinges so that the end result is a strong durable plastic container that can be formed through a moiding process to provide disk or card storage in a readily accessible form.

In summation, this invention comprises a foldable enclosure having an insert, preferably in the form of a tray-like member, therein for easy access to magnetic storage disks or cards.

More particularly, in the embodiment of the invention described below, one cover, having a ledge or side wall therearound, is normally the base of the container when it is in the open position. The other cover forms an upper cover which folds in a book-like manner onto the lower cover and supports the tray-like insert. The insert is pivotally supported on the upper cover by means of a pintal so that it can swing backwardly and forwardly. In the closed position of the container, it can rest against the inside surface of the upper and lower covers. In the open position, it can be placed generally on edge against the lower cover within the walls or ledge therearound.

The tray-like insert of the described embodiment has a pair of fan tabs and side walls which prevent the magnetic storage disks or cards from excessive movement or sliding therein. The magnetic storage disks or cards can be reviewed by merely spreading apart the tabs so as to fan through the magnetic storage disks and ascertain the number or title with respect to each one.

In this embodiment, the entire enclosure, including the top and bottom covers, can be folded inwardly, thereby allowing the tray-like insert to be implaced and secured therebetween. The top and bottom covers and side walls of the bottom cover form a complete enclosure for the magnetic storage disks or cards in the tray-like insert. When magnetic cards are to be stored, the tray-like insert may be divided by a wall to form two adjoint pockets into which the cards can be implaced.

The foregoing embodiment is provided with living hinges between the top and bottom covers in the form of a web or binding for the enclosure, thereby making the enclosure a flexible and readily manufactured device by means of a plastic molding or forming process.

The invention is described further by way of example, with reference to the description below taken in conjunction with the accompanying drawings wherein:

Figure 1 shows a perspective view of the magnetic storage disk enclosure of this invention in an open position with a series of fragmented magnetic storage disks implaced therein;

Figure 2 shows the enclosure of Figure 1 in its folded relationship with the insert therein folded backwardly and the top cover folded downwardly in overlying relationship to the bottom cover;

Figure 3 shows a midline sectional view taken through the midline of the enclosure as it would be seen through the center of Figure 1;

Figure 4 shows a side elevation view of the enclosure with the insert moved backwardly to an overcenter position of the showing of Figure 1;

Figure 5 shows a front elevation view of the enclosure;

Figure 6 shows a fragmented and sectional view of the pintal and hinge seat of this invention where the insert is hinged to the side walls of the covers as inscribed by circle 6 of Figure 3;

Figure 7 shows a detailed side elevation of the living hinge between the top and bottom covers as would be seen in a side elevation view inscribed by circle 7 of Figure 4;

Figure 8 shows a perspective view of the alternative embodiment employing the tray insert for magnetic cards;

Figure 9 shows a detailed sectional view of the locking portion as locked, of the enclosure as described and circled through a section inscribed by circle 9 of Figure 2;

Figure 10 shows the sectional detail of Figure 9 in the unlocked condition; and

Figure 11 shows an elevation view of the alternative embodiment shown in Figure 8.

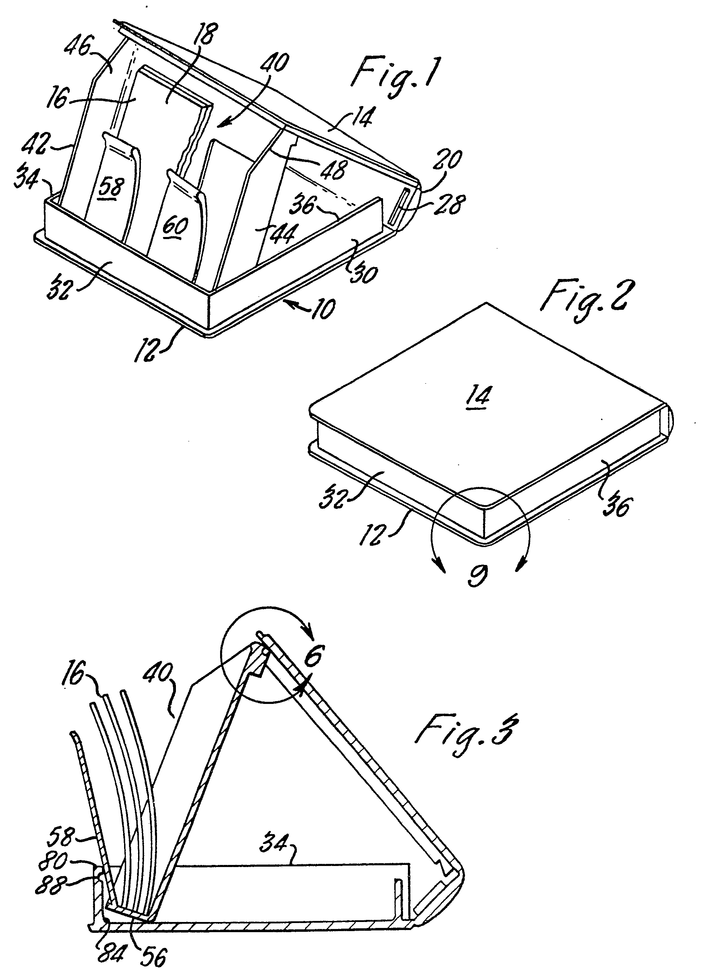

Looking more particularly at Figure 1 and the ancillary figures related thereto which constitute the remaining figures, a container or enclosure 10 is shown. The container 10 has a lower or first cover 12 and an upper or second cover 14.

The two respective covers 12 and 14 are generally placed in an angular upper and horizontal lower position when the container is open. As can be seen in Figure 1, the container is open with a plurality of magnetic disk storage members 16 implaced therein. The magnetic disk storage members 16 are the standard disks which are sometimes referred to in the common parlance of the art as floppy disks, flexible disks, or diskettes. Regardless of the type or size of disk or diskette which is used, this container serves the function of storing them.

Generally, the disks or diskettes are enclosed within an envelope in order to prevent dirt or dust exposure and damage to the surfaces thereof. The envelopes are usually provided with a label 18 which has been shown. The label 18 describes the material that is on the disk and can be cataloged or serialized in any particular form in order to provide for ready access to the information stored on the disks.

The container 10 with the upper and lower covers 12 and 14 provides for a complete enclosure of the disks 16 when the container is closed as shown in Figure 2. The covers 12 and 14 are secured in place by means of a web 20 or binding. The web 20 or binding is formed between the covers 12 and 14 in a molding process or the covers can be joined by any other suitable means.

The cover 12 is joined to the web or binding 20 by means of a living hinge 24 and the upper cover 14 is joined by a second living hinge 26 thereto. The two respective living hinges 24 and 26 allow for the web 20 or binding to be flexed backwardly and forwardly and to open in the manner as described herein.

The web or binding 20 has an indexing member or wall 28 which allows the web when folded inwardly to be indexed with respect to a wall 30. The wall 30 surrounds the bottom cover 12 in a U-shaped manner having a front portion 32 and two side portions 34 and 36. The side portions or walls 34 and 36 serve to enclose the disk memory units when they are folded downwardly, so that the disks 16 are completely surrounded and enclosed when the covers 12 and 14 are placed in overlying relationship to each other as seen in Figure 2.

The living hinges 24 and 26 are of sufficient flexibility and resiliency so that they will not be easily torn. At the same time, they are of sufficient flexibility and thickness to allow for long term bending and usage thereof.

The covers 12 and 14 serve to hold and enclose a tray-like insert 40. The insert 40 comprises a tray-like member that has side walls 42 and 44 terminating in slanted leading surfaces respectively 46 and 48. The slanting leading surfaces 46 and 48 provide easy folding movement over the leading edge of the wall 32 so that it does not bind thereon when the container is being folded together.

The tray or insert 40 is formed with two openings 50 and 52 that are surrounded by an M-shaped web 54. The M-shaped web 54 has a lower surface attached to the bottom or end of the tray 56 which serves to allow the disks to rest thereon.

A pair of fan tabs 58 and 60 are connected to the bottom 56 and terminate in a rounded or smooth surface. The fan tabs 58 and 60 are flexible and bend from their ends to where they are attached to the bottom of the tray.

The fan tabs 58 and 60 are shown in a flexed or bent position in Figure 1, whereby the magnetic memory disks 16 can be fanned and looked at with respect to each of the labels 18 on the upper left hand corner of each one. In other words, the showing of Figure 1 is with the fan tabs 58 and 60 in displaced position in the manner of being fanned by hand.

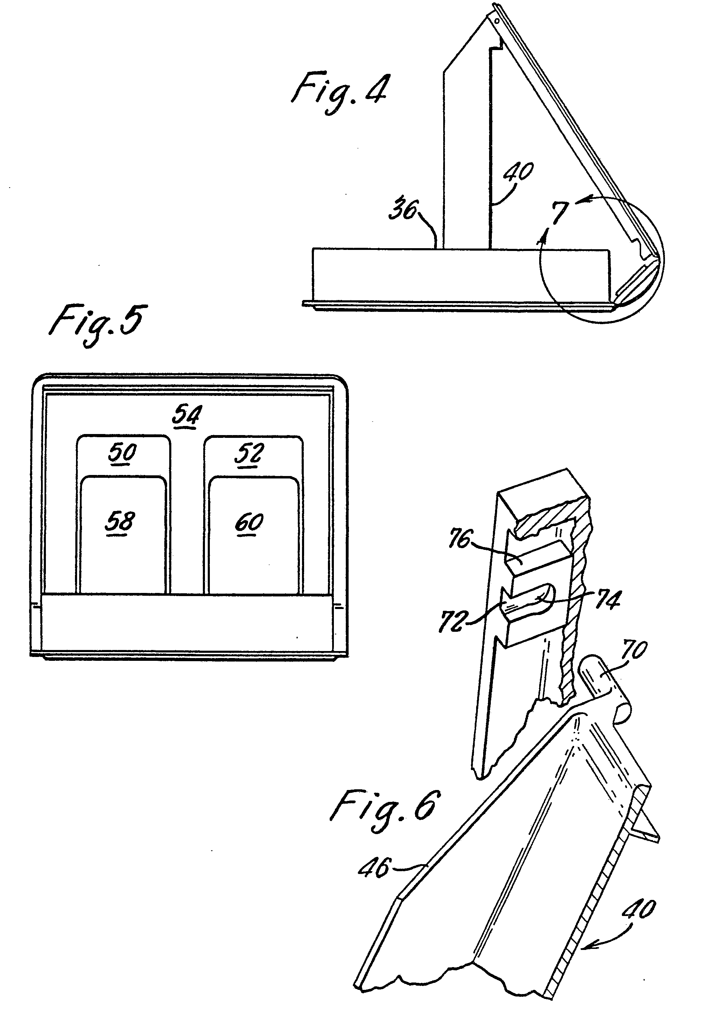

The tray 40 is secured to the upper cover 14 by means of a pintal 70 which engages a slot 72 having a rounded opening 74 therein in the edge region of the cover 14. The slot 72 and rounded opening 74 are formed in a boss 76 which is molded into the side portion of the cover 14 to provide easy movement of the pintal 70 for pivotal swinging action. The entire swinging action afforded the cover 14 as hinged on the pintals 70 allows for movement so that it can swing backwardly into a position of being implaced within the container or enclosure. As can be seen in Figure 4, the insert or tray is being moved backwardly and is in an overcenter position during the course of its movement to the folded position. The stop flange 28 serves to rigidify and hold the tray 40 from lateral movement and rigidifies the entire container when it is folded up.

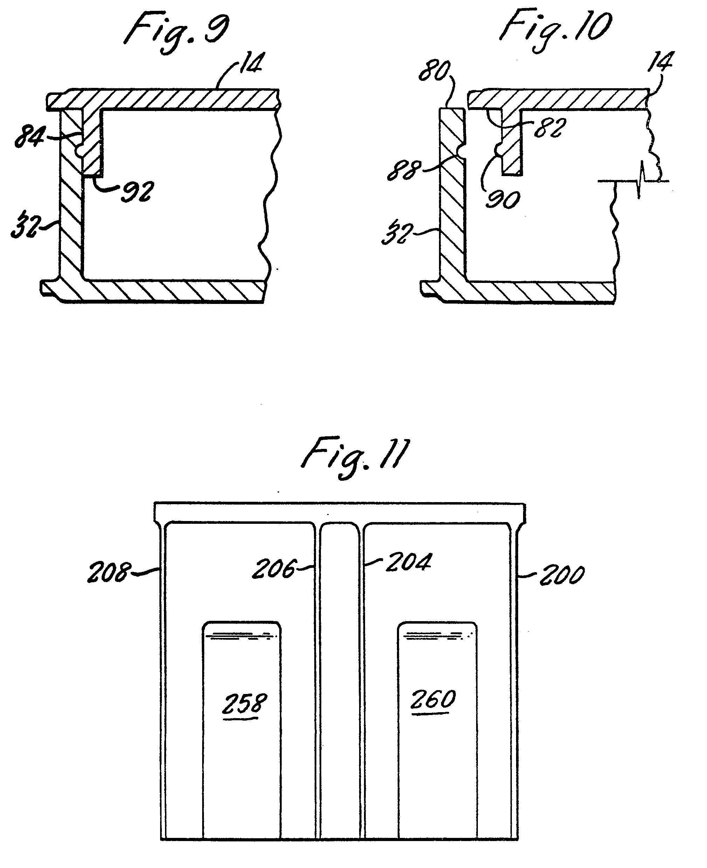

Looking more particularly at Figures 9 and 10, a detailed showing of the locking mechanism as encircled by circle 9 of Figure 2 is shown. In particular, the top 14 of the container is shown having a depending wall or spline 84. The depending wall 84 has an edge 92 along the front of the lid 14. A portion of the depending wall 84 has a bead 90. The bead 90 allows the depending wall 84 to be inserted or biased by the plastic memory of the material into a groove 88 that is in the upstanding wall 32. Thus, the top of the wall 32, namely top 80 is in close juxtaposition to the inside surface 82 and is forced internally by the flexible nature of the plastic of the bead 90 engaging groove 88.

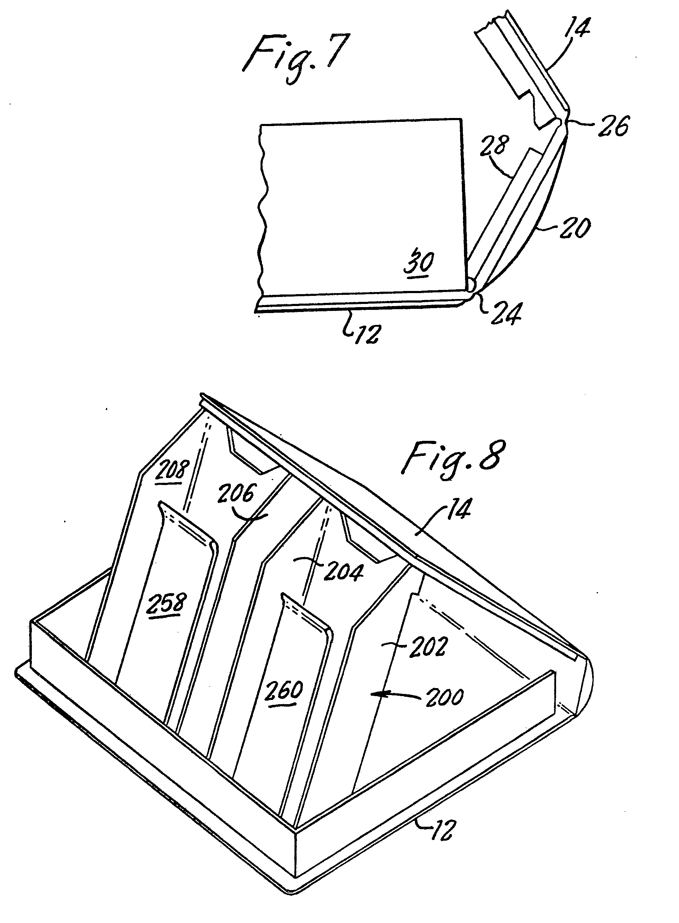

Looking more particularly at Figures 8 and 11, an alternative embodiment is shown wherein the like portions, namely the top 14 and the base 12 are utilized. However, the two respective portions employ a modified insert or tray. In particular, a tray 200 is shown having side walls 202, 204, 206 and 208. The two outer walls 202 and 208 are formed in the same manner as the side walls 42 and 44. In addition thereto, a pair of interior walls 204 and 206 are fomed in the same manner as the outer side walls. In this manner, rectangular magnetic cards can be inserted into the rectangular slots that are provided.

A pair of tabs that form fan tabs similar to tabs 58 and 60 are provided. These tabs have been numbered 258 and 260 in respective correspondence to the showing of Figure 1. All the other details of the invention are substantially the same in all respects as the showing of Figure 1. This allows magnetic cards to be held within the rectangular pockets provided between the walls 202, 204, 206 and 208 behind the fan tabs 258 and 260, so that the entire series of magnetic cards can be implaced within the pockets and held thereby.

From the foregoing, it can be seen that this invention is a broad step over the prior art insofar as it provides storage for memory disks in an easy, facile and compact manner. As a consequence, the invention is to be read broadly in light of the following claims for covering the encapsulation, storage and containerization of magnetic memory disks or cards.

## Claims

1. A container (10) for holding magnetic memory members (16), comprising:
   a first cover (12);
   a second cover (14) joined by a hinge connection (24, 26) to said first cover (12);
   an insert (40; 200) pivotally attached to one (14) of said covers so as to allow said insert (40; 200) to be folded between said first and second covers (12, 14) in a closed condition of the container (10); and,
   means (58, 60; 258, 260) on said insert to retain magnetic memory members (16);
   characterised in that the insert (40; 200) is pivotally attached to said one cover (14) at a region remote from the hinge connection (24, 26) joining the second cover (14) to the first cover (12) so as to be supportable across the opening between the first and second covers (12, 14) by engagement with the other (12) of said covers in an open condition of the container (10).

2. A container as claimed in claim 1, characterised in that said other cover (12) is provided with a peripheral wall (30) arranged to engage the insert (40; 200) for supporting the insert (40; 200) generally on edge in the open condition of the container (10).

3. A container as claimed in claim 2, characterised in that the peripheral wall (30) is arranged to surround the insert (40; 200) in the closed condition of the container (10).

4. A container as claimed in claim 2 or 3, characterised in that the peripheral wall (30) of said other cover (12) and said one cover (14) are provided with resiliently interengageable projection and recess means (88, 90) for securing the container (10) in the closed condition.

5. A container as claimed in any preceding claim, characterised in that the insert (40; 200) is pivotally attached to said one cover (14) by means of a pintal (70) provided on one of the insert (40; 200) and said one cover (14), and a rounded opening (74) at one end of an open ended slot (72) provided in the other of the insert (40; 200) and said one cover (14).

6. A container as claimed in any preceding claim, characterised in that the insert (40; 200) comprises a tray-like member.

7. A container as claimed in claim 6, characterised in that the tray-like member (200) is provided with a pair of parallel side walls (202, 208) and at least one interior wall (204, 206) disposed parallel to the side walls (202, 208).

8. A container as claimed in claim 6 or 7, characterised in that the means (58, 60; 258, 260) to retain the magnetic memory members (16) comprise flexible tabs arranged to hold the magnetic memory members (16) against the base of the tray-like member (400; 200).

9. A container as claimed in claim 8, characterised in that the flexible tabs (58, 60; 258, 260) are constructed and arranged to permit fanning of the magnetic memory members (16) in the open condition of the container (10).

10. A container as claimed in any preceding claim, characterised in that the hinge connection (24, 26) joining the second cover (14) to the first cover (12) comprises a web (20) connected by a first living hinge (24) to the first cover (12) and by a second living hinge (26) to the second cover (14).

11. A container as claimed in any preceding claim, in combination with magnetic memory members (16).

**Patentansprüche**

1. Behälter (10) zum Festhalten oder Aufbewahren von Magnetspeicherelementen oder -karten (16) mit
einem ersten Deckel (12),
einem zweiten Deckel (14), der durch eine Gelenkverbindung (24, 26) mit dem ersten Deckel (12) verbunden ist,
einem Einsatz (40; 200), der in der Weise an einem der Deckel (14) drehbar angebracht ist, daß der Einsatz (40; 200) im geschlossenen Zustand des Behälters (10) zwischen den ersten und den zweiten Deckel (12, 14) geklappt werden kann, und
Einrichtungen (58, 60; 258, 260) an dem Einsatz, die zum Festhalten oder Stützen von Magnetspeicherelementen (16) dienen,
dadurch gekennzeichnet, daß der Einsatz (40; 200) an dem einen Deckel (14) in einem von der Gelenkverbindung (24, 26), die den zweiten Deckel (14) mit dem ersten Deckel (12) verbindet, entfernten Bereich drehbar angebracht ist, so daß der Einsatz (40; 200) im geöffneten Zustand des Behälters (10) durch Eingriff mit dem anderen Deckel (12) quer über den Raumbereich bzw. die Öffnung zwischen dem ersten und dem zweiten Deckel (12, 14) abstützbar ist.

2. Behälter nach Anspruch 1, dadurch gekennzeichnet, daß der andere Deckel (12) eine periphere Wand (30) aufweist, die so angeordnet ist, daß sie im geöffneten Zustand des Behälters (10) mit dem Einsatz (40; 200) in Eingriff steht, wodurch der Einsatz (40; 200) — im allgemeinen am Rand — abgestützt wird.

3. Behälter nach Anspruch 2, dadurch gekennzeichnet, daß die periphere Wand (30) so angeordnet ist, daß sie den Einsatz (40; 200) im geschlossenen Zustand des Behälters (10) umgibt.

4. Behälter nach Anspruch 2 oder 3, dadurch gekennzeichnet, daß der eine Deckel (14) und die periphere Wand (30) des anderen Deckels (12) Vorsprünge und Vertiefungen (88, 90) aufweisen, die miteinander in elastischen Eingriff gebracht werden können, wodurch der Behälter (10) im geschlossenen Zustand festgehalten wird.

5. Behälter nach einem der vorhergehenden Ansprüche, dadurch gekennzeichnet, daß der Einsatz (40; 200) an dem einen Deckel (14) mittels eines Gelenkstiftes (70), der an einem Vertreter der aus dem Einsatz (40; 200) und dem Deckel (14) bestehenden Gruppe vorgesehen ist, und mittels einer abgerundeten Öffnung (74), die sich an einem Ende einer offenen Nut (72) befindet, die in dem anderen Vertreter der aus dem Einsatz (40; 200) und dem Deckel (14) bestehenden Gruppe vorgesehen ist, drehbar angebracht ist.

6. Behälter nach einem der vorhergehenden Ansprüche, dadurch gekennzeichnet, daß der Einsatz (40; 200) aus einem schalenartigen Element besteht.

7. Behälter nach Anspruch 6, dadurch gekennzeichnet, daß das schalenartige Element (200) ein Paar paralleler Seitenwände (202, 208) und mindestens eine parallel zu den Seitenwänden (202, 208) angeordnete Innenwand (204, 206) aufweist.

8. Behälter nach Anspruch 6 oder 7, dadurch gekennzeichnet, daß die zum Festhalten oder Stützen der Magnetspeicherelemente (16) dienenden Einrichtungen (58, 60; 258, 260) aus flexiblen Leisten bestehen, die so angeordnet sind, daß die Magnetspeicherelemente (16) gegen den Boden des schalenartigen Elements (40; 200) gehalten werden.

9. Behälter nach Anspruch 8, dadurch gekennzeichnet, daß die flexiblen Leisten (58, 60; 258, 260) so aufgebaut und angeordnet sind, daß die Magnetspeicherelemente (16) im geöffneten Zustand des Behälters (10) fächerförmig ausgebreitet werden können.

10. Behälter nach einem der vorhergehenden Ansprüche, dadurch gekennzeichnet, daß die Gelenkverbindung (24, 26), die den zweiten Deckel (14) mit dem ersten Deckel (12) verbindet, einen Steg oder eine Versteifung (20) aufweist, der oder die durch ein erstes flexibles Faltgelenk (24) mit dem ersten Deckel (12) und durch ein zweites flexibles Faltgelenk (26) mit dem zweiten Deckel (14) verbunden ist.

11. Behälter nach einem der vorhergehenden Ansprüche in Verbindung mit Magnetspeicherelementen (16).

**Revendications**

1. Récipient (10) destiné à contenir des éléments à memoire magnétique (16), comprenant:
un premier plat (12);

un second plat (14) relié par une articulation (24, 26) au premier plat (12);

une pièce d'insertion (40, 200) fixée de manière pivotante sur un (14) des plats afin de permettre de plier la pièce d'insertion (40, 200) entre les premier et second plats (12, 14) en position fermée du récipient (10); et,

des moyens (58, 60, 258, 260) prévus sur la pièce d'insertion pour retenir les éléments à mémoire magnétique (16);

caractérisé en ce que la pièce d'insertion (40, 200) est montée pivotante sur un plat (14) dans une zone éloignée de l'articulation (24, 26) réunissant le second plat (14) et le premier plat (12) de façon à être maintenus dans l'ouverture entre les premier et second plat (12, 14) par contact avec l'autre plat (12) en position ouverte du récipient (10).

2. Récipient selon la revendication 1, caractérisé en ce que l'autre plat (12) comporte une paroi périphérique (30) disposée pour entrer en contact avec la pièce d'insertion (40, 200), en vue de supporter celle-ci en général sur sa tranche, lorsque le récipient (10) est en position ouverte.

3. Récipient selon la revendication 2, caractérisé en ce que la paroi périphérique (30) est disposée de façon à entourer la pièce d'insertion (40, 200) en position fermée du récipient (10).

4. Récipient selon la revendication 2 ou 3, caractérisé en ce que la paroi périphérique (30) de l'autre plat (12) et ledit plat (14) sont dotés de moyens à saillie et à évidement (88, 90) aptes à coopérer de manière élastique pour maintenir le récipient (10) en position fermée.

5. Récipient selon l'une quelconque des revendications précédentes, caractérisé en ce la pièce d'insertion (40, 200) est montée pivotante sur le dit plat (14) par un pivot (70) prévu sur la pièce d'insertion (40, 200) ou sur ledit plat (14) et par une ouverture arrondie (74) prévue à une extrémité d'une fente à extrémité ouverte (72) réalisée sur l'autre des deux éléments, soit la pièce d'insertion (40, 200) ou ledit plat (14).

6. Récipient selon l'une quelconque des revendications précédentes, caractérisé en ce que la pièce d'insertion (40, 200) comprend un élément en forme de plateau.

7. Récipient selon la revendication 6, caractérisé en ce que l'élément en forme de plateau (200) comporte deux parois latérales parallèles (200, 208) et au moins une paroi intérieure (204, 206) disposée parallèlement aux parois latérales (202, 208).

8. Récipient selon la revendication 6 ou 7, caractérisé en ce que les moyens (58, 60, 258, 260) destinés à retenir les éléments à mémoire magnétique (16) comprennent des pattes souples disposées de façon à maintenir les éléments à mémoire magnétique (16) contre la base de l'élément en forme de plateau (400, 200).

9. Récipient selon la revendication 8, caractérisé en ce que ces pattes souples (58, 60, 258, 260) sont réalisées et disposées de façon à permettre d'ouvrir en éventail les éléments à mémoire magnétique (16) lorsque les récipients (10) sont en position ouverte.

10. Récipient selon l'une quelconque des revendications précédentes, caractérisé en ce que l'articulation (24, 26) réunissant le second plat (14) et le premier plat (12) comprend un dos (20) relié par une première charnière vive (24) au premier plat (12) et par une seconde charnière vive (26) au second plat (14).

11. Récipient selon l'une quelconque des revendications précédentes, en combinaison avec des éléments à mémoire magnétique (16).

0 001 353

Fig.1

Fig.2

Fig.3

1

*Fig. 4*

36

40

7

*Fig. 5*

54

50 52

58 60

76

72 74

70

*Fig. 6*

46

40

O 001 353

*Fig.7*

30

12

14

26

28

20

24

*Fig.8*

208

206

258

204

260

202

200

14

12

3

## Fig. 9

## Fig. 10

## Fig. 11